# EUROPÄISCHE PATENTSCHRIFT

(11) **EP 3 051 194 B1**
(45) Veröffentlichungstag und Bekanntmachung des Hinweises auf die Patenterteilung: **28.06.2017**
(21) Anmeldenummer: 16152401.2
(22) Anmeldetag: 22.01.2016
(51) Int. Cl.: F16L 5/04, H02G 3/04, H02G 3/22

(54) **ANORDNUNG ZUM BRANDSCHUTZ EINER DURCHFÜHRUNG VON LÄNGLICHEN INSTALLATIONSELEMENTEN WIE ROHREN, LEITUNGEN UND DERGLEICHEN DURCH EINE WAND ODER DECKE**
ASSEMBLY FOR FIREPROOFING THE FEEDTHROUGH OF ELONGATED INSTALLATION ELEMENTS SUCH AS TUBES, PIPES AND THE LIKE THROUGH A WALL OR CEILING
SYSTEME PARE-FEU DE PASSAGE D'ELEMENTS D'INSTALLATION ALLONGES TELS QUE TUBES, CONDUITES ET SIMILAIRES A TRAVERS UN MUR OU UN PLAFOND

(30) Priorität: 28.01.2015 DE 102015101233
(43) Veröffentlichungstag der Anmeldung: 03.08.2016
(73) Patentinhaber: svt Brandschutz Vertriebsgesellschaft mbH International, 21217 Seevetal (DE)
(72) Erfinder: Reher, Reinald, 59379 Selm (DE)
(74) Vertreter: Stüven, Ralf

(56) Entgegenhaltungen:
- EP-A2- 2 236 887
- EP-A2- 2 570 708
- WO-A1-97/04838
- DE-A1-102012 025 094
- US-B1- 6 360 502

## Beschreibung

Die Erfindung betrifft eine Anordnung zum Brandschutz einer Durchführung von länglichen Installationselementen wie Rohren, Leitungen und dergleichen durch eine Wand oder Decke.

Anordnungen zum Brandschutz einer Durchführung von länglichen Installationselementen wie Rohren, Leitungen und dergleichen durch eine Wand oder Decke sind im Stand der Technik grundsätzlich bekannt. Häufig umfassen solche Anordnungen mindestens eine Brandschutzmanschette, die außen um ein Rohr, eine Leitung oder ähnliches herumgelegt ist und regelmäßig einen im Brandfall aufschäumenden Dämmschichtbildner umfasst, so dass der Ringsspalt zwischen der Laibung des Wand- oder Deckendurchbruchs, durch den das Installationselement geführt ist, und der Außenwand des Installationselements im Brandfall verschlossen wird.

Aus der DE 10 2012 025 094 A1 ist beispielsweise eine Brandschutzmanschette bekannt, die auf der brandgefährdeten Fläche eines Bautrennelements, beispielsweise einer Wand oder Decke, angeordnet ist und ein aus einem ringartig oder zylindrisch in sich geschlossenen Blechband gebildetes Gehäuse umfasst, in dessen Innerem ein Brandschutzkörper angeordnet ist. Jede der Montagelaschen des metallenen Gehäuses ist über eine Verbindungsstelle mit einem aus einem biegefähigen brandfesten Material gefertigten länglich streifen-, draht-, ketten-, oder seilartigen Montagelaschenverlängerungselement mit zumindest einem Montageloch verbunden, welches zwischen Wandungsaußenseite eines durch die Durchführungsöffnung geführten Rohres und der Innenwandung der Durchführungsöffnung bis auf die einer Brandeinwirkung nicht ausgesetzte Fläche des Bautrennelements geführt ist, an diese Fläche anliegend umgebogen und mittels eines Befestigungsmittels auf der nicht brandgefährdeten Fläche des Bautrennelements befestigt ist. Diese Konstruktion soll eine Anpassung an verschiedene Dicken von Bautrennelementen ermöglichen und darüber hinaus verhindern, dass die Brandschutzmanschette bei unter Brandeinwirkung eintretender Zerstörung des Wand- oder Deckenbaustoffs vorzeitig in den brennenden Raum fällt.

Insbesondere im Falle von brennbaren länglichen Installationselementen wie beispielsweise brennbaren Rohren, speziell Rohren mit größeren Durchmessern, kann es im Falle eines Brandes jedoch dennoch passieren, dass eine feuerseitige Brandschutzmanschette vorzeitig in den brennenden Raum fällt und es zum Durchbrand auf die feuerabgewandte Seite und damit zum Versagen der Abschottung kommt. Darüber hinaus ist die in der DE 10 2012 025 094 beschriebene Konstruktion verhältnismäßig aufwendig und bietet keine Lösung des Problems für den Fall, dass die Manschette lediglich aus einem Gewebe- oder Folienmaterial besteht, das um das Rohr herumgewickelt ist.

Die EP 2236887 A2 beschreibt ein Verfahren zur Befestigung eines bandförmigen, ein intumeszierendes Material enthaltenden Abdichtmittels an einem Bauteil zur Abdichtung einer Leitungsdurchführung mit mehreren Halteelementen, die jeweils einen Befestigungsschenkel und einen Halteschenkel mit einem freien Ende aufweisen. Zuerst wird das Abdichtmittel um die Leitung gelegt, dann das freie Ende jedes Halteelementes umgebogen sowie an dem von der Bauteiloberfläche abgewandten Rand des Abdichtmittels angeordnet und anschliessend jedes Halteelement an dem Bauteil festgelegt.

Die WO 97/04838 beschreibt eine Brandschutzmanschette für ein Kunststoffrohr, das durch eine Bohrung geführt ist, wobei die Brandschutzmanschette eine zylindrische Metallhülse umfasst, die auf ihrer Innenseite eine Schicht intumeszierenden Materials aufweist. Darüber hinaus ist innerhalb der Metallhülse eine Gewebemanschette aus feuerbeständigem Material vorgesehen, die das Rohr umgibt. Im Brandfall schmilzt das Rohr und die Manschette wird von dem intumeszierenden Material radial nach innen gepresst, um die Bohrung zu blockieren.

Die US 6360502 B1 beschreibt eine Brandschutzmanschette für durch eine Wand- oder Bodenöffnung durchgeführte Rohre oder dergleichen, wobei die Brandschutzmanschette durch drahtförmige Sicherungselemente fixiert ist.

In der EP 2570708 A3 ist eine bandförmige Brandschutzmanschette beschrieben, die Brandschutzadditive umfasst und als rechteckiger Streifen ausgeführt ist. Dieser weist entlang nur einer Längsseite eine Vielzahl von Einschnitten auf, so dass benachbarte Laschen gebildet werden, die innerhalb eines Ringspaltes zwischen der Innenseite eines Deckendurchbruchs und der Außenseite eines Rohres umgebogen werden, wodurch Taschen gebildet werden, in die ein Dichtmaterial eingebracht werden kann. Zur Verstärkung der Brandschutzmanschette kann ein Trägerband vorgesehen sein.

Aufgabe der vorliegenden Erfindung ist es daher, eine möglichst einfache und flexible Lösung für das Problem von im Brandfall zu früh abfallenden Brandschutzmanschetten, beispielsweise für den Fall brennbarer Rohre, bereitzustellen.

Zur Lösung der Aufgabe stellt die vorliegende Erfindung in einem ersten Aspekt eine Anordnung zum Brandschutz einer Durchführung von länglichen Installationselementen wie Rohren, Leitungen und dergleichen durch eine Wand oder Decke bereit, umfassend
a) einen Wand oder Deckendurchbruch (8) mit einer eine erste Laibung (12) aufweisenden ersten Öffnung (10) und einer der ersten Öffnung (10) gegenüberliegenden eine zweite Laibung (13) aufweisenden zweiten Öffnung (11),
b) ein längliches Installationselement, das durch die zu einem ersten brandgefährdeten Raum gerichtete, die erste Laibung aufweisende erste Öffnung eines Wand- oder Deckendurchbruchs geführt ist,
c) eine erste Brandschutzmanschette, die das längliche Installationselement auf dessen Außenseite im Bereich der ersten Öffnung umhüllt, wobei die erste Brandschutzmanschette zumindest teilweise innerhalb des Wand- oder Deckendurchbruchs und damit zwischen der Außenseite des länglichen Installationselements und der ersten Laibung der ersten Öffnung angeordnet ist, und
d) mindestens ein streifen- oder drahtförmiges nicht-brennbares Sicherungselement mit einem ersten Ende und einem zweiten Ende, wobei das mindestens eine streifen- oder drahtförmige nicht-brennbare Sicherungselement
   i. sich zwischen der Außenseite des länglichen Installationselements und der zur Außenseite des länglichen Installationselements gerichteten Innenseite der ersten Brandschutzmanschette durch den Wand- oder Deckendurchbruch erstreckt, und
   ii. an seinem ersten Ende so umgebogen ist, dass es die zu dem ersten brandgefährdeten Raum gerichtete Stirnseite der ersten Brandschutzmanschette umgreift und auf der Außenseite der ersten Brandschutzmanschette mit seinem ersten Ende soweit in den Wand- oder Deckendurchbruch zurückgeführt ist, dass es in den Ringspalt zwischen erster Brandschutzmanschette und erster Laibung eingreift.

Die vorliegende Erfindung bietet eine einfache, wirtschaftliche und flexible, dennoch aber zuverlässige Lösung für die Halterung von Brandschutzmanschetten am gewünschten Einsatzort, insbesondere für den Fall kritischer Rohrkonfigurationen, vor allem Konfigurationen mit brennbaren Rohren vergleichsweise großen Durchmessers und/oder großer Wandungsstärken. Auch eine Nachrüstung vorhandener Installationen ist möglich.

Bei dem länglichen Installationselement kann es sich um ein Rohr, eine elektrische oder sonstige Leitung, z.B. Wasserleitung, ein Leitungs- oder Rohrbündel oder ein ähnliches Element handeln, das in Gebäuden, Schiffen etc. durch eine Durchführung hindurchgeführt wird, um einen Raum mit einem anderen zu verbinden. Im Falle eines Rohrs handelt es sich insbesondere um ein brennbares Rohr, d.h. ein aus einem brennbaren Material gefertigtes Rohr, beispielsweise ein Kunststoffrohr. Bei der Brandschutzmanschette handelt es sich vorzugsweise um eine Brandschutzmanschette ohne ein starres metallenes, beispielsweise aus einem Metallblech gefertigtes, Gehäuse, sondern um ein flexibles flächiges folien-, matten- oder bandförmiges Element, das beispielsweise aus einem mit Dämmschichtbildner beschichteten ein- oder mehrlagigen Gewebe bestehen kann. Unter einer Laibung ist hier die innere Wandung eines Wand- oder Deckendurchbruchs zu verstehen, einschließlich deren gegebenenfalls vorhandener Auskleidung, beispielsweise mit Gipsspachtel oder -mörtel.

Wenn hier von der "Außenseite" des länglichen Installationselements gesprochen wird, sind damit die nach außen, d.h. zur Laibung des Durchbruchs gerichteten Seiten oder Bereiche des Installationselements gemeint. Es kann sich dabei beispielsweise um die Außenwandung eines Rohres oder einer Leitung, oder auch um die Außenflächen eines Leitungs- oder Rohrbündels handeln.

Das streifen- oder drahtförmige nicht-brennbare Sicherungselement ist aus einem ausreichend steifen, aber vorzugsweise per Hand oder mittels eines handbetätigten Werkzeugs biegbaren Material gefertigt, beispielsweise Metall. Bei dem streifen- oder drahtförmigen nicht-brennbaren Sicherungselement kann es sich beispielsweise um einen einfachen Metalldraht oder Metallstreifen ausreichender Stärke handeln. Es kann sich jedoch auch um ein metallenes Lochband oder dergleichen handeln. Das Sicherungselement umgreift die Brandschutzmanschette stirnseitig und ist so ausgelegt, dass es die Brandschutzmanschette auch bei Hitzeeinwirkung im Falle eines Brandes zumindest über den für einen vorgesehenen Brandschutz erforderlichen Zeitraum zuverlässig hält, so dass es nicht in den brennenden Raum fällt. Der Fachmann kann ein hinsichtlich beispielsweise Material, Stärke und Geometrie für den jeweiligen Zweck geeignetes Sicherungselement anhand von Erfahrungswerten oder gegebenenfalls Routineversuchen ermitteln. Eine geeignete Anzahl von vorzugsweise über den Querschnitt des länglichen Installationselements verteilten Sicherungselementen kann der Fachmann in Abhängigkeit von der Einbausituation und der Dimensionierung des Sicherungselements oder der Sicherungselemente ebenfalls anhand seines Fachkönnens ermitteln.

Die Erfindung kann sowohl bei Wänden, die zwei brandgefährdete Räume voneinander trennen als auch bei Decken, die im Wesentlichen vor Brandeinwirkungen von dem darunter liegenden Raum geschützt werden müssen, vorteilhaft eingesetzt werden. Die Erfindung kann bei unterschiedlichen Wänden oder Decken zum Einsatz kommen, beispielsweise bei Beton- oder Trockenbauwänden und -decken.

Im ersten, für Wände vorgesehenen, Fall, bei dem das längliche Installationselement zusätzlich durch die zu einem zweiten brandgefährdeten Raum gerichtete zweite Öffnung des Wand- oder Deckendurchbruchs geführt ist, und das längliche Installationselement auf seiner Außenseite im Bereich der zweiten Öffnung von einer zweiten Brandschutzmanschette umhüllt ist, die zumindest teilweise innerhalb des Wanddurchbruchs und damit zwischen der Außenseite des länglichen Installationselements und der zweiten Laibung der zweiten Öffnung angeordnet ist, ist es bevorzugt, dass das mindestens eine streifen- oder drahtförmige nicht-brennbare Sicherungselement sich zwischen der Außenseite des länglichen Installationselements und den zum länglichen Installationselement gerichteten Innenseiten der Brandschutzmanschetten durch den Wand- oder Deckendurchbruch erstreckt, an seinen beiden Enden so umgebogen ist, dass es die zu den brandgefährdeten Räumen gerichteten Stirnseiten der Brandschutzmanschetten jeweils umgreift und auf den Außenseiten der Brandschutzmanschetten mit beiden Enden soweit in den Wand- oder Deckendurchbruch zurückgeführt ist, dass es in den Ringspalt zwischen der ersten Brandschutzmanschette und der ersten Laibung sowie in den Ringspalt zwischen der zweiten Brandschutzmanschette und der zweiten Laibung eingreift.

Im zweiten Fall, d.h. für den Fall einer Decke, die in der Regel nur einseitig einem brandgefährdeten Raum zugewendet ist oder im Falle eines Brandes lediglich vor den Brandeinwirkungen eines, nämlich des darunter liegenden Raumes geschützt werden muss, ist es bevorzugt, dass das streifen- oder drahtförmige nicht-brennbare Sicherungselement an seinem zweiten Ende von dem länglichen Installationselement wegweisend umgebogen und gegebenenfalls an einer Fläche der Decke fixiert ist, die einem dem ersten brandgefährdeten Raum gegenüberliegenden Raum zugewandt ist. Eine Fixierung des streifen- oder drahtförmigen nicht-brennbaren Sicherungselements an der Decke ist bei ausreichender Steifigkeit des Sicherungselements zwar bevorzugt, jedoch nicht erforderlich. Auch ein einfaches Umbiegen ohne zusätzliche Fixierung kann bei entsprechender Ausgestaltung des Sicherungselements genügen. Bei dem gegenüberliegenden Raum kann es sich um einen brandgefährdeten oder um einen nicht brandgefährdeten Raum handeln. Vorzugsweise handelt es sich um einen nicht brandgefährdeten Raum.

Vorzugsweise ist jedes in den Wand- oder Deckendurchbruch zurückgeführte Ende des streifen- oder drahtförmigen nicht-brennbaren Sicherungselements jeweils mindestens so weit in den Wand- oder Deckendurchbruch zurückgeführt, dass es mindestens soweit in den jeweiligen Ringspalt zwischen Brandschutzmanschette und Laibung eingreift, dass die von dem streifen- oder drahtförmigen nicht-brennbaren Sicherungselement jeweils umgriffene Brandschutzmanschette auch im Brandfall von dem streifen- oder drahtförmigen nicht-brennbaren Sicherungselement umgriffen bleibt. Bei ausreichender Länge des innerhalb des Wand- oder Deckendurchbruchs liegenden zurückgeführten Teils des streifen- oder drahtförmigen nicht-brennbaren Sicherungselements ist es selbst für den Fall, dass die Steifigkeit des Sicherungselements nicht ausreichen sollte, um dessen Aufbiegen unter Hitzeeinwirkung, beispielsweise auf Grund der durch die Brandschutzmanschette ausgeübten Zugbelastung, ganz oder im Wesentlichen zu verhindern, durch den vorhandenen oder dann stattfindenden Kontakt mit der Laibung des Durchbruchs möglich, zumindest ein weiteres Aufbiegen zu unterbinden, so dass die Brandschutzmanschette weiterhin haltend umgriffen bleibt. Hierzu ist das Verhältnis zwischen der Länge x des innerhalb des Durchbruchs liegenden Teils des streifen- oder drahtförmigen nicht-brennbaren Sicherungselements und der Höhe des Ringspalts zwischen der Außenseite der Brandschutzmanschette und der Laibung des Durchbruchs bevorzugt größer 1:1, vorzugsweise mindestens 1,5:1, bevorzugt mindestens 2:1, besonders bevorzugt mindestens 5:1. Beispielsweise kann bei Trockenbauwänden mit beidseitig 2 x 1,25 cm dicken Beplankungen jedes in den Wand- oder Deckendurchbruch zurückgeführte Ende des streifen- oder drahtförmigen nicht-brennbaren Sicherungselements jeweils so weit zurückgeführt sein, dass es mindestens 2,5 cm in den Ringspalt zwischen Brandschutzmanschette und Laibung eingreift. Besonders bevorzugt ist das streifen- oder drahtförmige nicht-brennbare Sicherungselement so dimensioniert, dass es den Ringspalt zwischen Brandschutzmanschette und Laibung im Wesentlichen überbrückt, so dass es mit seinem umgebogenen innerhalb des Durchbruchs liegenden Teil einerseits an der Brandschutzmanschette und andererseits an der Laibung anliegt.

Es ist bevorzugt, zwei oder mehrere streifen- oder drahtförmige nicht-brennbare Sicherungselemente über den Querschnitt des Rohres zur Sicherung der Brandschutzmanschette vorzusehen. Besonders bevorzugt sind mindestens drei streifen- oder drahtförmige nicht-brennbare Sicherungselemente über den Querschnitt des Rohres verteilt angeordnet. Beispielsweise können drei, vier, fünf, sechs oder mehr streifen- oder drahtförmige nicht-brennbare Sicherungselemente über den Querschnitt des Rohres verteilt angeordnet sein.

In einem weiteren Aspekt betrifft die vorliegende Erfindung auch ein Verfahren zur Herstellung eines Brandschutzes für eine Durchführung von länglichen Installationselementen wie Rohren, Leitungen und dergleichen durch eine Wand oder Decke, wobei bei einem länglichen Installationselement, das durch eine zu einem ersten brandgefährdeten Raum gerichtete, eine erste Laibung aufweisende erste Öffnung eines Wand- oder Deckendurchbruchs geführt ist, und das auf seiner Außenseite im Bereich der ersten Öffnung von einer ersten Brandschutzmanschette so umhüllt ist, dass die erste Brandschutzmanschette zumindest teilweise innerhalb des Wand- oder Deckendurchbruchs und damit zwischen der Außenseite des länglichen Installationselements und der ersten Laibung der ersten Öffnung angeordnet ist, mindestens ein streifen- oder drahtförmiges nicht-brennbares Sicherungselement mit einem ersten Ende und einem zweiten Ende
a) zwischen der Außenseite des länglichen Installationselements und der zur Außenseite des länglichen Installationselements gerichteten Innenseite der ersten Brandschutzmanschette durch den Wand- oder Deckendurchbruch geführt und an seinem ersten Ende so umgebogen wird oder so umgebogen ist, dass es die zu dem ersten brandgefährdeten Raum gerichtete Stirnseite der ersten Brandschutzmanschette umgreift, und
b) mit seinem umgebogenen Ende auf der Außenseite der ersten Brandschutzmanschette soweit in den Wand- oder Deckendurchbruch zurückgeführt wird, dass es in den Ringspalt zwischen erster Brandschutzmanschette und erster Laibung eingreift.

Das mindestens eine streifen- oder drahtförmige nicht-brennbare Sicherungselement kann entweder bereits an einem Ende in geeigneter Weise vorgebogen sein, bevor es durch den Durchbruch geführt wird, so dass es nach der Durchführung die Stirnseite der zugehörigen Brandschutzmanschette umgreifen kann, oder erst nach Durchführung durch den Durchbruch in geeigneter Weise umgebogen werden. Obwohl es bevorzugt ist, das streifen- oder drahtförmige nicht-brennbare Sicherungselement mit dem nicht vorgebogenen Ende voran durch den Durchbruch zu führen, ist es auch möglich, das streifen- oder drahtförmige nicht-brennbare Sicherungselement mit seinem vorgebogenen Ende voran durch die Durchführung zu führen.

In einer bevorzugten, vorzugsweise für den Fall der Herstellung eines Brandschutzes für eine Durchführung von länglichen Installationselementen durch eine Wand vorgesehenen Ausführungsform des erfindungsgemäßen Verfahrens, bei der das längliche Installationselement zusätzlich durch eine der ersten Öffnung gegenüberliegende zu einem zweiten brandgefährdeten Raum gerichtete, eine zweite Laibung aufweisende zweite Öffnung des Wanddurchbruchs geführt ist, und das längliche Installationselement auf seiner Außenseite im Bereich der zweiten

Öffnung von einer zweiten Brandschutzmanschette umhüllt ist, die zumindest teilweise innerhalb des Wanddurchbruchs und damit zwischen der Außenseite des länglichen Installationselements und der zweiten Laibung der zweiten Öffnung angeordnet ist, wird das mindestens eine streifen- oder drahtförmige nicht-brennbare Sicherungselement
i) zwischen der Außenseite des länglichen Installationselements und den zum länglichen Installationselement gerichteten Innenseiten der Brandschutzmanschetten durch den Wanddurchbruch geführt und an seinen beiden Enden so umgebogen, dass es die zu den brandgefährdeten Räumen gerichteten Stirnseiten der Brandschutzmanschetten jeweils umgreift, oder
ii) zwischen der Außenseite des länglichen Installationselements und den zum länglichen Installationselement gerichteten Innenseiten der Brandschutzmanschetten durch den Wanddurchbruch geführt, wobei es an einem seiner Enden so vorgebogen ist, dass es nach Durchführung durch den Wanddurchbruch die zu den brandgefährdeten Räumen gerichtete Stirnseite der ersten Brandschutzmanschette umgreift, und an seinem anderen Ende so umgebogen, dass es die zu den brandgefährdeten Räumen gerichtete Stirnseite der zweiten Brandschutzmanschette umgreift, und
iii) mit seinen umgebogenen Enden auf den Außenseiten der Brandschutzmanschetten soweit in den Wanddurchbruch zurückgeführt, dass es jeweils in den Ringspalt zwischen Brandschutzmanschette und Laibung eingreift.

In einer alternativen, vorzugsweise für den Fall der Herstellung eines Brandschutzes für eine Durchführung von länglichen Installationselementen durch eine Decke vorgesehenen Ausgestaltung des erfindungsgemäßen Verfahrens wird das mindestens eine streifen- oder drahtförmige nicht-brennbare Sicherungselement an seinem zweiten Ende von dem länglichen Installationselement wegweisend umgebogen und vorzugsweise, jedoch nicht notwendig, an einer Fläche der Decke fixiert, die einem dem brandgefährdeten Raum gegenüberliegenden Raum zugewandt ist. Bei dem gegenüberliegenden Raum kann es sich um einen brandgefährdeten oder um einen nicht brandgefährdeten Raum handeln.

Jedes in den Wand- oder Deckendurchbruch zurückgeführte Ende des streifen- oder drahtförmigen nicht-brennbaren Sicherungselements wird bevorzugt jeweils mindestens soweit zurückgeführt, dass es jeweils mindestens soweit in den Ringspalt zwischen Brandschutzmanschette und Laibung eingreift, dass die jeweilige von dem streifen- oder drahtförmigen nicht-brennbaren Sicherungselement umgriffene Brandschutzmanschette auch im Brandfall von dem streifen- oder drahtförmigen nicht-brennbaren Sicherungselement umgriffen bleibt. Für den Fall einer Trockenbauwand oder -decke mit einer beidseitig 2 x 1,25 cm dicken Beplankung kann beispielsweise jedes in den Wand- oder Deckendurchbruch zurückgeführte Ende des streifen- oder drahtförmigen nicht-brennbaren Sicherungselements soweit zurückgeführt werden, dass es jeweils mindestens 2,5 cm in den Ringspalt zwischen Brandschutzmanschette und Laibung eingreift.

Besonders bevorzugt werden zwei oder mehrere, besonders bevorzugt mindestens drei streifen-oder drahtförmige nicht-brennbare Sicherungselemente über den Querschnitt des länglichen Installationselements verteilt angeordnet.

Die vorliegende Erfindung wird im Folgenden allein zu Veranschaulichungszwecken anhand der angefügten Figuren näher erläutert. Es zeigt:
Figur 1 eine beispielhafte Ausführungsform der erfindungsgemäßen Anordnung in einer Wand in einer Schnittansicht.
Figur 2 einen Ausschnitt aus einer Schnittansicht einer Ausführungsform der erfindungsgemäßen Anordnung in einer Wand.
Figur 3 eine Schnittansicht einer weiteren Ausführungsform der erfindungsgemäßen Anordnung in einer Decke.
Figur 4 eine schematische Darstellung einer Ausführungsform des erfindungsgemäßen Verfahrens.

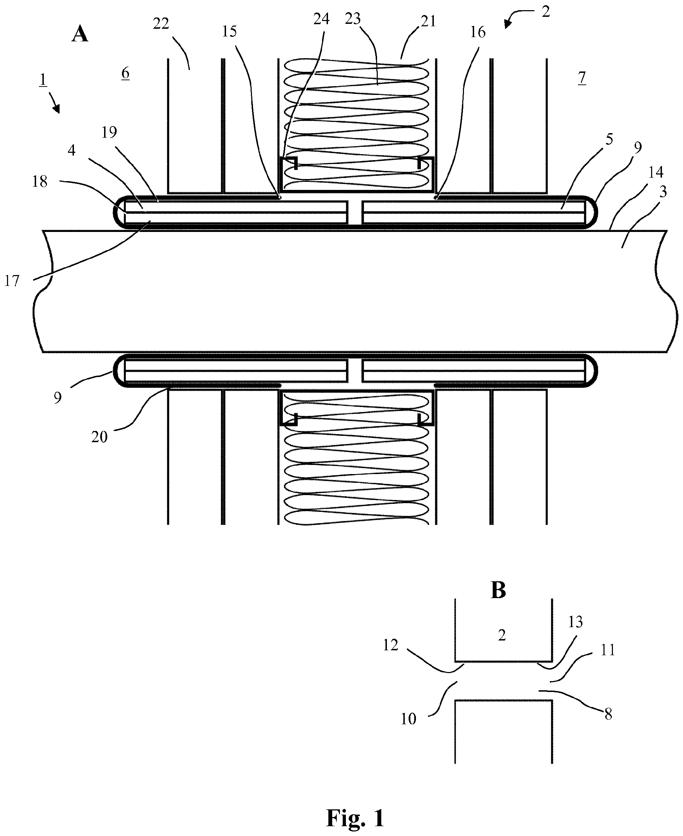

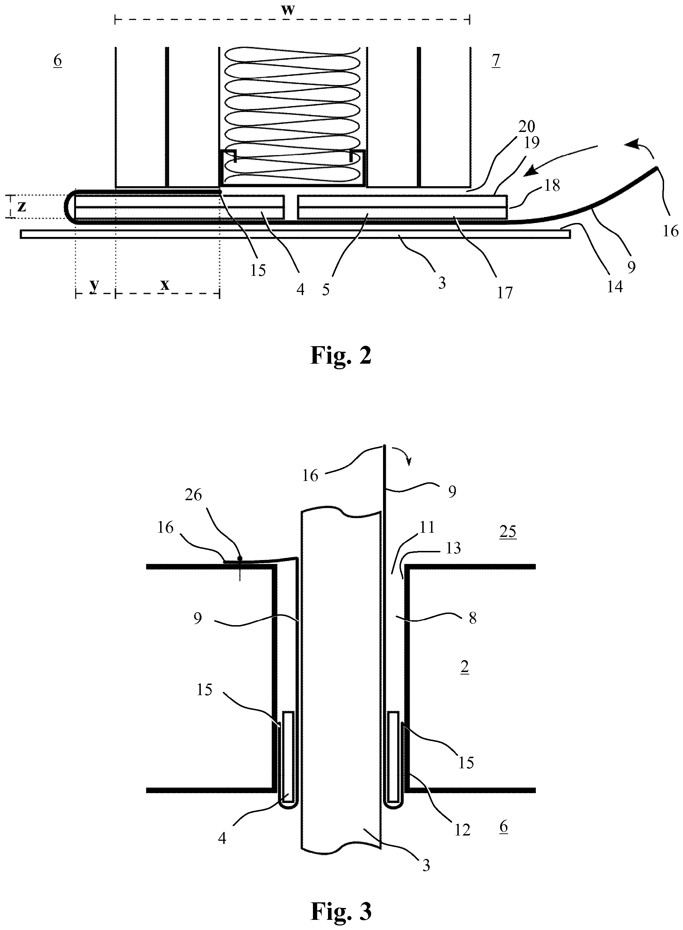

Figur 1 zeigt eine Ausführungsform einer erfindungsgemäßen Anordnung 1 für eine Wand 2, bei der die Wand 2 zwei brandgefährdete Räume 6, 7 voneinander trennt. Dargestellt ist hier eine Trockenbaukonstruktion aus einzelnen Wandelementen 22, beispielsweise Gipskartonplatten, die einen Hohlraum 21 bilden, der mit einer Mineralfaserdämmung 23 verfüllt ist. C-Profile 24 dienen als Abstandhalter und Stabilisierungselemente für die Wandkonstruktion. Figur 1A zeigt eine Detailansicht, in Figur 1B ist nur eine sehr schematische Ansicht der Wandkonstruktion dargestellt, die lediglich die Wand 2 und den hierdurch gezogenen Durchbruch 8 zeigt, um Merkmale, die in der Detailansicht verdeckt oder schwer sichtbar sind, zu kennzeichnen. Die Wand 2 weist einen Durchbruch 8 mit zu den Räumen 6, 7, gerichteten Öffnungen 10, 11 auf, durch den ein längliches Installationselement 3, hier ein Rohr, geführt ist. Im Bereich der Öffnungen 10, 11 sind mehrlagige Brandschutzmanschetten 4, 5 um die Außenseite 14 des Rohres 3 gewickelt. Zwei streifen- oder drahtförmige nicht-brennbare Sicherungselemente 9, hier einfache Metalldrähte, sind in der Schnittansicht erkennbar. Sie sind jeweils an der Außenseite 14 des Rohres 3 entlang und zwischen den zur Rohraußenseite 14 gerichteten Innenseiten 17 der Brandschutzmanschetten 4, 5, und der Außenseite 14 des Rohres 3 angeordnet. Die Enden 15, 16 der streifen- oder drahtförmigen nicht-brennbaren Sicherungselemente 9 sind von der Rohraußenseite 14 weg um 180° um die Stirnseiten 18 der Brandschutzmanschetten 4, 5 herum umgebogen und entlang der Außenseiten 19 der Brandschutzmanschetten 4, 5 in den Ringspalt 20 zwischen den Außenseiten 19 der Brandschutzmanschetten 4, 5 und der jeweiligen Laibung 12, 13 des Durchbruchs 8 zurückgeführt, so dass die umgebogenen Enden 15, 16 der streifen- oder drahtförmigen nicht-brennbaren Sicherungselemente 9 jeweils zwischen den Laibungen 12, 13 und den entsprechenden Außenseiten 19 der Brandschutzmanschetten 4, 5 zu liegen kommen. Jedes streifen- oder drahtförmige nicht-brennbare Sicherungselement 9 ist hier so dimensioniert, dass es mit seinen Enden 15, 16 mit den Innenflächen der Wandelemente 22 fluchtet und den Ringspalt 20 überbrückt, so dass es einerseits an der jeweiligen Außenseite 19 der Brandschutzmanschetten 4, 5 und andererseits an der jeweiligen Laibung 12, 13 anliegt. Darüber hinaus ist das Verhältnis zwischen der Länge x (s. Fig. 2) des innerhalb des Durchbruchs 8 liegenden Teils des streifen- oder drahtförmigen nicht-brennbaren Sicherungselements 9 und der Höhe des Ringspalts 20 zwischen der Außenseite 19 der Brandschutzmanschette 4, 5 und der Laibung 12, 13, so gewählt, dass ein Aufbiegen des streifen- oder drahtförmigen nicht-brennbaren Sicherungselements 9, das dazu führen könnte, dass die Brandschutzmanschetten 4, 5 von dem streifen- oder drahtförmigen nicht-brennbaren Sicherungselement 9 nicht mehr gehalten werden, verhindert ist. Auch für den Fall, dass das Rohr 3 im Brandfall zerstört wird, werden die Brandschutzmanschetten 4, 5 von dem streifen-oder drahtförmigen nicht-brennbaren Sicherungselement 9 weiterhin gehalten und daran gehindert, in den brennenden Raum 6, 7 zu fallen.

Figur 2 zeigt eine Schnittansicht eines Teils der erfindungsgemäßen Anordnung gemäß Figur 1 in einem Stadium seiner Herstellung. Das streifen- oder drahtförmige nicht-brennbare Sicherungselement 9 ist hier zwischen Rohraußenseite 14 und den Innenseiten 17 der Brandschutzmanschetten 4, 5 durch den Durchbruch 8 hindurchgeführt. Das erste Ende 15 des streifen- oder drahtförmigen nicht-brennbaren Sicherungselements 9 ist um die Stirnseite 18 der ersten Brandschutzmanschette 4 herumgebogen und in den Durchbruch 8 zurückgeführt, so dass die erste Brandschutzmanschette 4 von dem streifen- oder drahtförmigen nicht-brennbaren Sicherungselement 9 umgriffen ist. Das zweite Ende 16 des streifen- oder drahtförmigen nicht-brennbaren Sicherungselements 9 ist hier noch nicht vollständig umgebogen. Die Pfeile deuten die Richtung an, in die das streifen- oder drahtförmige nicht-brennbare Sicherungselement 9 um die Stirnseite 18 der zweiten Brandschutzmanschette 5 herum umgebogen und in den Ringspalt 20 zwischen der Außenseite 19 der Brandschutzmanschette 5 und der Laibung 13 zurückgeführt wird. Die Gesamtlänge L des streifen- oder drahtförmigen nicht-brennbaren Sicherungselements 9 ergibt sich aus der Wandstärke w, der Länge y des jeweils gegenüber der Wand 2 in den Raum 6, 7 überstehenden Teils der Brandschutzmanschetten 4, 6, der Dicke z der Brandschutzmanschetten 4, 5 und der Länge x des innerhalb des Durchbruchs 8 liegenden Teils des streifen- oder drahtförmigen nicht-brennbaren Sicherungselements 9 wie folgt: L = w + 4y + 2z + 2x.

Figur 3 zeigt schematisch eine Schnittansicht einer Ausführungsform der vorliegenden Erfindung für den Fall einer Decke 2, die lediglich einseitig vor Brandeinwirkungen aus dem brandgefährdeten Raum 6 zu schützen ist. Lediglich die erste Brandschutzmanschette 4 ist im Bereich der ersten Öffnung 10 um das längliche Installationselement 3, hier ebenfalls ein Rohr, herum angeordnet. Auf der gegenüberliegenden Seite der Decke 2, d.h. zu dem Raum 25 hin, der brandgefährdet sein kann oder nicht, vorzugsweise aber nicht brandgefährdet ist, ist keine zweite Brandschutzmanschette 5 erforderlich. Auf der linken Seite der Figur 3 ist ein bereits vollständig installiertes streifen- oder drahtförmiges nicht-brennbares Sicherungselement 9 dargestellt. Das streifen- oder drahtförmige nicht-brennbare Sicherungselement 9 ist an seinem ersten Ende 15 um die Brandschutzmanschette 4 herumgebogen und in den Durchbruch 8 zurückgeführt, so dass die Brandschutzmanschette 4 sicher umgriffen ist. Das gegenüberliegende zweite Ende 16 des streifen- oder drahtförmigen nicht-brennbaren Sicherungselements 9 ist von der Rohraußenseite 14 weg in Richtung Decke 2 gebogen und auf einer zu dem Raum 25 gerichteten Fläche der Decke 2 mithilfe eines Befestigungsmittels 26 fixiert. Auf der rechten Seite ist ein Stadium dargestellt, bei dem das streifen- oder drahtförmige nicht-brennbare Sicherungselement 9 bislang lediglich durch den Durchbruch 8 geführt ist, so dass die Brandschutzmanschette 4 auf der dem brandgefährdeten Raum 6 zugewendeten Seite umgriffen ist. Auf der gegenüberliegenden Seite muss das Ende 16 des streifen- oder drahtförmigen nicht-brennbaren Sicherungselements 9 noch in Richtung des Pfeils umgebogen und an der entsprechenden Deckenfläche fixiert werden.

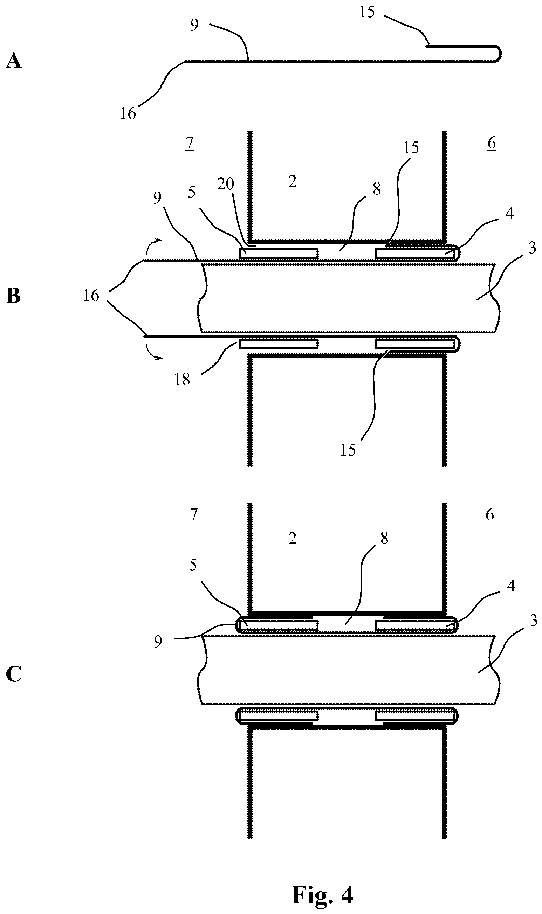

Figur 4 zeigt schematisch die Herstellung einer erfindungsgemäßen Anordnung bei einer Wandkonstruktion, wobei die Wand 2 hier zwei jeweils brandgefährdete Räume 6, 7 voneinander trennt. Figur 4A zeigt lediglich das an seinem ersten Ende 15 bereits vorgebogene streifen- oder drahtförmige nicht-brennbare Sicherungselement 9. Figur 4B zeigt eine Wand 2 mit einem durch einen Durchbruch 8 geführten länglichen Installationselement 3, z.B. einem Rohr. Zwei am ersten Ende 15 jeweils vorgebogene streifen- oder drahtförmige nicht-brennbare Sicherungselemente 9 sind bereits durch den Durchbruch 8 hindurchgeführt, so dass die erste Brandschutzmanschette 4 von dem Sicherungselement 9 umgriffen ist. Am zweiten Ende 16 müssen die streifen- oder drahtförmigen nicht-brennbaren Sicherungselemente 9 lediglich noch in den durch die Pfeile angedeuteten Richtungen um 180° um die Stirnseiten 18 der zweiten Brandschutzmanschette 5 herum gebogen und in den Durchbruch 8 zurückgeführt werden, um auch die Brandschutzmanschette 5 zu umgreifen und beide Brandschutzmanschetten 4, 5 gegeneinander zu sichern. Den Endzustand zeigt Figur 4C.

## Patentansprüche

1. Anordnung zum Brandschutz einer Durchführung von länglichen Installationselementen wie Rohren, Leitungen und dergleichen durch eine Wand oder Decke (2), umfassend
a) einen Wand- oder Deckendurchbruch (8) mit einer eine erste Laibung (12) aufweisenden ersten Öffnung (10) und einer der ersten Öffnung (10) gegenüberliegenden eine zweite Laibung (13) aufweisenden zweiten Öffnung (11),
b) ein längliches Installationselement (3), das durch die zu einem ersten brandgefährdeten Raum (6) gerichtete, die erste Laibung (12) aufweisende erste Öffnung (10) des Wand- oder Deckendurchbruchs (8) geführt ist,
c) eine erste Brandschutzmanschette (4), die das längliche Installationselement (3) auf dessen Außenseite (14) im Bereich der ersten Öffnung (10) umhüllt, wobei die erste Brandschutzmanschette (4) zumindest teilweise innerhalb des Wand- oder Deckendurchbruchs (8) und damit zwischen der Außenseite (14) des länglichen Installationselements (3) und der ersten Laibung (12) der ersten Öffnung (10) angeordnet ist, und
d) mindestens ein streifen- oder drahtförmiges nicht-brennbares Sicherungselement (9) mit einem ersten Ende (15) und einem zweiten Ende (16), wobei das mindestens eine streifen- oder drahtförmige nicht-brennbare Sicherungselement (9)
i. sich zwischen der Außenseite (14) des länglichen Installationselements (3) und der zur Außenseite (14) des länglichen Installationselements (3) gerichteten Innenseite (17) der ersten Brandschutzmanschette (4) durch den Wand- oder Deckendurchbruch (8) erstreckt, und
ii. an seinem ersten Ende (15) so umgebogen ist, dass es die zu dem ersten brandgefährdeten Raum (6) gerichtete Stirnseite (18) der ersten Brandschutzmanschette (4) umgreift und auf der Außenseite (19) der ersten Brandschutzmanschette (4) mit seinem ersten Ende (15) soweit in den Wand- oder Deckendurchbruch (8) zurückgeführt ist, dass es in den Ringspalt (20) zwischen erster Brandschutzmanschette (4) und erster Laibung (12) eingreift.

2. Anordnung nach Anspruch 1 für eine Wand, wobei
a) das längliche Installationselement (3) zusätzlich durch die zu einem zweiten brandgefährdeten Raum (7) gerichtete zweite Öffnung (11) des Wanddurchbruchs (8) geführt ist,
b) das längliche Installationselement (3) auf seiner Außenseite (14) im Bereich der zweiten Öffnung (11) von einer zweiten Brandschutzmanschette (5) umhüllt ist, die zumindest teilweise innerhalb des Wanddurchbruchs (8) und damit zwischen der Außenseite (14) des länglichen Installationselements (3) und der zweiten Laibung (13) der zweiten Öffnung (11) angeordnet ist, und
c) das mindestens eine streifen- oder drahtförmige nicht-brennbare Sicherungselement (9) sich zwischen der Außenseite (14) des länglichen Installationselements (3) und den zum länglichen Installationselement (3) gerichteten Innenseiten (17) der Brandschutzmanschetten (4, 5) durch den Wanddurchbruch (8) erstreckt, an seinen beiden Enden (15, 16) so umgebogen ist, dass es die zu den brandgefährdeten Räumen (6, 7) gerichteten Stirnseiten (18) der Brandschutzmanschetten (4, 5) jeweils umgreift und auf den Außenseiten (19) der Brandschutzmanschetten (4, 5) mit beiden Enden (15, 16) soweit in den Wanddurchbruch (8) zurückgeführt ist, dass es in den Ringspalt (20) zwischen der ersten Brandschutzmanschette (4) und der ersten Laibung (12) sowie in den Ringspalt (20) zwischen der zweiten Brandschutzmanschette (5) und der zweiten Laibung (13) eingreift.

3. Anordnung nach Anspruch 1 für eine Decke, **dadurch gekennzeichnet, dass** das streifen-oder drahtförmige nicht-brennbare Sicherungselement (9) an seinem zweiten Ende (16) von dem länglichen Installationselement (3) wegweisend umgebogen und vorzugsweise an einer dem ersten brandgefährdeten Raum (6) gegenüberliegenden Raum (25) zugewandten Fläche der Decke (2) fixiert ist.

4. Anordnung nach einem der vorhergehenden Ansprüche, **dadurch gekennzeichnet, dass** jedes in den Wand- oder Deckendurchbruch (8) zurückgeführte Ende (15, 16) des streifen- oder drahtförmigen nicht-brennbaren Sicherungselements (9) jeweils mindestens soweit in den Ringspalt (20) zwischen Brandschutzmanschette (4, 5) und Laibung (12, 13) eingreift, dass die von dem streifen- oder drahtförmigen nicht-brennbaren Sicherungselement (9) jeweils umgriffene Brandschutzmanschette (4, 5) auch im Brandfall von dem streifen- oder drahtförmigen nicht-brennbaren Sicherungselement (9) umgriffen bleibt.

5. Anordnung nach einem der vorhergehenden Ansprüche, **dadurch gekennzeichnet, dass** mindestens drei streifen- oder drahtförmige nicht-brennbare Sicherungselemente (9) über den Querschnitt des länglichen Installationselements (3) verteilt angeordnet sind.

6. Verfahren zur Herstellung eines Brandschutzes für eine Durchführung von länglichen Installationselementen wie Rohren, Leitungen und dergleichen durch eine Wand oder Decke (2), wobei bei einem länglichen Installationselement (3), das durch eine zu einem ersten brandgefährdeten Raum (6) gerichtete, eine erste Laibung (12) aufweisende erste Öffnung (10) eines Wand- oder Deckendurchbruchs (8) geführt ist, und das auf seiner Außenseite im Bereich der ersten Öffnung (10) von einer ersten Brandschutzmanschette (4) so umhüllt ist, dass die erste Brandschutzmanschette (4) zumindest teilweise innerhalb des Wand- oder Deckendurchbruchs (8) und damit zwischen der Außenseite und der ersten Laibung (12) der ersten Öffnung (10) angeordnet ist, mindestens ein streifen- oder drahtförmiges nicht-brennbares Sicherungselement (9) mit einem ersten Ende (15) und einem zweiten Ende (16)
a) zwischen der Außenseite des länglichen Installationselements (3) und der zur Außenseite des länglichen Installationselements (3) gerichteten Innenseite (17) der ersten Brandschutzmanschette (4) durch den Wand- oder Deckendurchbruch (8) geführt und an seinem ersten Ende (15) so umgebogen wird oder so umgebogen ist, dass es die zu dem ersten brandgefährdeten Raum (6) gerichtete Stirnseite (18) der ersten Brandschutzmanschette (4) umgreift, und
b) mit seinem umgebogenen Ende (15) auf der Außenseite der ersten Brandschutzmanschette (4) soweit in den Wand- oder Deckendurchbruch (8) zurückgeführt wird, dass es in den Ringspalt (20) zwischen erster Brandschutzmanschette (4) und erster Laibung (12) eingreift.

7. Verfahren nach Anspruch 6, **dadurch gekennzeichnet, dass**
a) bei Herstellung eines Brandschutzes für eine Durchführung von länglichen Installationselementen (3) durch eine Wand das längliche Installationselement zusätzlich durch eine der ersten Öffnung (10) gegenüberliegende zu einem zweiten brandgefährdeten Raum (7) gerichtete, eine zweite Laibung (13) aufweisende zweite Öffnung (11) des Wand- oder Deckendurchbruchs (8) geführt ist, und das längliche Installationselement (3) auf seiner Außenseite im Bereich der zweiten Öffnung (11) von einer zweiten Brandschutzmanschette (5) umhüllt ist, die zumindest teilweise innerhalb des Wanddurchbruchs (8) und damit zwischen der Außenseite des länglichen Installationselements (3) und der zweiten Laibung (13) der zweiten Öffnung (11) angeordnet ist, das mindestens eine streifen- oder drahtförmige nicht-brennbare Sicherungselement (9)
i) zwischen der Außenseite des länglichen Installationselements (3) und den zum länglichen Installationselement (3) gerichteten Innenseiten (17) der Brandschutzmanschetten (4, 5) durch den Wanddurchbruch (8) geführt und an seinen beiden Enden (15, 16) so umgebogen wird, dass es die zu den brandgefährdeten Räumen (6, 7) gerichteten Stirnseiten (18) der Brandschutzmanschetten (4, 5) jeweils umgreift, oder
ii) zwischen der Außenseite des länglichen Installationselements (3) und den zum länglichen Installationselement (3) gerichteten Innenseiten (17) der Brandschutzmanschetten (4, 5) durch den Wanddurchbruch (8) geführt wird, wobei es an einem seiner Enden (15, 16) so vorgebogen ist, dass es nach Durchführung durch den Wanddurchbruch (8) die zu den brandgefährdeten Räumen (6, 7) gerichtete Stirnseite (17) der ersten Brandschutzmanschette (4) umgreift, und an seinem anderen Ende (16, 15) so umgebogen wird, dass es die zu den brandgefährdeten Räumen (6, 7) gerichtete Stirnseite (18) der zweiten Brandschutzmanschette (5) umgreift, und
iii) mit seinen umgebogenen Enden (15, 16) auf den Außenseiten der Brandschutzmanschetten (4, 5) soweit in den Wanddurchbruch (8) zurückgeführt wird, dass es jeweils in den Ringspalt (20) zwischen Brandschutzmanschette (4, 5) und Laibung (12, 13) eingreift, oder
b) bei Herstellung eines Brandschutzes für eine Durchführung von länglichen Installationselementen (3) durch eine Decke (2) das mindestens eine streifen- oder drahtförmige nicht-brennbare Sicherungselement (9) an seinem zweiten Ende (16) von dem länglichen Installationselement (3) wegweisend umgebogen und vorzugsweise an einer einem nicht brandgefährdeten Raum (25) zugewandten Fläche der Decke (2) fixiert wird.

8. Verfahren nach einem der Ansprüche 6 oder 7, **dadurch gekennzeichnet, dass** jedes in den Wand- oder Deckendurchbruch (8) zurückgeführte Ende (15, 16) des streifen- oder drahtförmigen nicht-brennbaren Sicherungselements (9) jeweils mindestens soweit in den Ringspalt (20) zwischen Brandschutzmanschette (4, 5) und Laibung (12, 13) eingreift, dass die jeweilige von dem streifen- oder drahtförmigen nicht-brennbaren Sicherungselement (9) umgriffene Brandschutzmanschette (4, 5) auch im Brandfall von dem streifen- oder drahtförmigen nicht-brennbaren Sicherungselement (9) umgriffen bleibt.

9. Verfahren nach einem der Ansprüche 6 bis 8, **dadurch gekennzeichnet, dass** mindestens drei streifen- oder drahtförmige nicht-brennbare Sicherungselemente (9) über den Querschnitt des länglichen Installationselements (3) verteilt angeordnet werden.

## Claims

1. An arrangement for the fire protection of the passage of elongated installation elements such as pipes, pipelines and suchlike through a wall or ceiling (2) comprising
a) a wall or ceiling breach (8) with a first opening (10) comprising a first scuncheon (12) and a second opening (11) opposite the first opening (10) having a second scuncheon (13)
b) an elongated installation element (3) which is passed through the first opening (10) comprising the first scuncheon (12) of the wall or ceiling breach (8) directed at a room (6) at risk of fire,
c) a first fire protection sleeve (4) which surrounds the longitudinal installation element (3) on its outer side (14) in the area of the first opening (10), wherein the first fire protection sleeve (4) is arranged at least partially inside the wall or ceiling breach (8) and thus between the outer side (14) of the elongated installation element (3) and the first scuncheon (12) of the first opening (10), and
d) at least one strip or wire-shaped non-flammable securing element (9) with a first end (15) and a second end (16) wherein the at least one strip or wire-shaped non-flammable securing element (9)
i. extends through the wall or ceiling breach (8) between the outer side (14) of the elongated installation element (3) and the inner side (17) of the first fire protection sleeve (4) facing the outer side (14) of the elongated installation element (3), and
ii. at its first end (15) is bent over in such a way that it surrounds the face end (18) of the first fire protection sleeve (4) facing the first room (6) at risk of fire and on the outer side (19) of the first fire protection sleeve (4) is taken back with its first end (15) so far into the wall or ceiling breach (8) that it engages in the annular gap (20) between the first fire protection sleeve (4) and the first scuncheon (12).

2. The arrangement according to claim 1 for a wall, wherein
a) the elongated installation element (3) additionally passes through the second opening (11) of the wall breach (8) facing a second room (7) at risk of fire,
b) the elongated installation element (3) is, on its outer side (14) in the area of the second opening (11) surrounded by a second fire protection sleeve (5) which is at least partially arranged within the wall breach (8) and thus between the outer side (14) of the elongated installation element (3) and the second scuncheon (13) of the second opening (11), and
c) the at least one strip or wire-shaped non-flammable securing element (9) extends through the wall breach (8) between the outer side (14) of the elongated installation element (3) and the inner sides (17) of the fire-protection sleeves (4, 5) directed towards the longitudinal installation element (3), is bent over at both its ends (15, 16) in such a way that it surrounds the end faces (18) of the fire-protection sleeves (4, 5) facing the rooms (6, 7) at risk of fire and on the outer sides (19) of the fire-protection sleeves (4, 5) is taken back with both ends (15, 16) so far into the wall breach (8) that it engages in the annular gap (20) between the first fire-protection sleeve (4) and the first scuncheon (12) as well as in the annular gap (20) between the second fire-protection sleeve (5) and second scuncheon (13).

3. The arrangement according to claim 1 for a ceiling, **characterised in that** the strip or wire-shaped non-flammable securing element (9) is bent over at its second end (16) away from the elongated installation element (3) and is preferably fixed on a surface of the ceiling (2) facing the room (25) opposite the first room (6) at risk of fire.

4. The arrangement according to any one of the preceding claims **characterised in that** each end (15, 16) of the strip or wire-like non-flammable securing element (9) taken back into the wall or ceiling breach (8) engages at least so far into the annular gap (20) between the fire-protection sleeve (4, 5) and scuncheon (12, 13) that even in the event of a fire the fire-protection sleeve (4, 5) surrounded by the strip or wire-like non-flammable securing element (9) remains surrounded by the strip or wire-like non-flammable securing element (9).

5. The arrangement according to any one of the preceding claims **characterised in that** at least three strip or wire-like non-flammable securing elements (9) are distributed over the cross-section of the elongated installation element (3).

6. A method of producing a fire protection for the passage of elongated installation elements such as pipes, pipelines and suchlike through a wall or ceiling (2) wherein in the case of an elongated installation element (3) that is passed through a first opening (10) of a wall or ceiling breach (8), having a first scuncheon (12) and facing a first room (6) at risk of fire, and which on its outer side in the area of the first opening (10) is surrounded by a first fire-protection sleeve (4) in such a way that the first fire-protection sleeve (4) is arranged at least partially within the wall or ceiling breach (8) and thus between the outer side and the first scuncheon (12) of the first opening (10), at least one strip or wire-like non-flammable securing element (9) is passed with a first end (15) and a second end (16)
a) between the outer side of the elongated installation element (3) and the inner side (17) of the first fire-protection sleeve (4) facing the outer side of the elongated installation element (3) through the wall or ceiling breach (8) and bent over at its first end (15) in such a way that it surrounds the face end (18) of the first fire-protection sleeve (4) facing the first room (6) at risk of fire, and
b) with its bent over end (15) on the outer side of the first fire protection sleeve (4) is taken so far back into the wall or ceiling breach (8) that it engages in the annular gap (20) between the first fire protection sleeve (4) and the first scuncheon (12).

7. The method according to claim 6 **characterised in that**
a) when manufacturing a fire-protection for the passage of elongated installation elements (3) though a wall the elongated installation element is also passed through a second opening (11) of the wall ceiling breach (8) having a second scuncheon (13) opposite the first opening (10) and facing a second room (7) at risk of fire, and on its outer side in the area of the second opening (11) the elongated installation element (3) is surrounded by a second fire-protection sleeve (5) which is arranged at least partially inside the wall breach (8) and thus between the outer side of the elongated installation element (3) and the second scuncheon (13) of the second opening (11), the at least one strip or wire-like non-flammable securing element (9)
i) is between the outside of the elongated installation element (3) and the inner sides (17) of the fire-protection sleeves (4, 5) facing the elongated installation element (3) passed through the wall breach (8) and bend over at its both ends (15, 16) in such a way that it surrounds the face ends (18) of the fire-protection sleeves (4, 5) facing the rooms (6, 7) at risk of fire, or
ii) between the outer side of the elongated installation element (3) and the inner sides (17) of the fire-protection sleeves (4, 5) facing the elongated installation element (3) is passed through the wall breach (8) wherein at one of its ends (15, 16) it is bent over in such a way that after passing through the wall breach (8) it surrounds the face side (17) of the first fire protection sleeve (4) facing the rooms (6, 7) at risk of fire, and at its other end (15, 16) is bent over in such a way that it surrounds the face end (18) of the second fire-protection sleeve (5) facing the rooms (6, 7) at risk of fire, and
iii) with its bent-over ends (15, 16) on the outer sides of the fire-protection sleeves (4, 5) is taken back so far into the wall breach (8) that it engages in the annular gap (20) between the fire-protection sleeve (4, 5) and scuncheon (12, 13), or
b) when producing a fire protection for the passage of elongated installation elements (3) through a ceiling (2) the at least one strip or wire-like non-flammable securing element (9) is bent over at its second end (16) away from the elongated installation element (3) and is preferably fixed on a surface of the ceiling (2) facing a room (25) not at risk of fire.

8. The method according to any one of claims 6 or 7 **characterised in that** each end (15, 16) of the strip or wire-like securing element (9) taken back into the wall or ceiling breach (8) engages at least so far in the annular gap (20) between the fire-protection sleeve (4, 5) and scuncheon (12, 13) that even in the event of fire the fire-protection sleeve (4, 5) surrounded by the strip or wire-like non-flammable securing element (9) remains surrounded by the strip or wire-like non-flammable securing element (9).

9. The method according any one of claims 6 to 8 **characterised in that** at least three strip or wire-like non-flammable securing elements (9) are distributed over the cross-section of the elongated installation element (3).

## Revendications

1. Agencement pour la protection contre l'incendie d'un passage d'éléments d'installation longitudinaux comme des tuyaux, des conduites et éléments analogues à travers une paroi ou un plafond (2), comprenant
a) un passage de paroi ou de plafond (8) avec une première ouverture (10) comportant un premier intrados (12) et une deuxième ouverture (11) comportant une deuxième intrados (13), opposée à la première ouverture (10),
b) un élément d'installation longitudinal (3) qui est passé à travers la première ouverture (10) du passage de paroi ou de plafond (8) orientée vers un premier espace (6) à risque d'incendie comportant le premier intrados (12),
c) une première manche coupe-feu (4) qui enveloppe l'élément d'installation longitudinal (3) sur sa face extérieure (14) dans la zone de la première ouverture (10), la première manche coupe-feu (4) étant au moins disposée en partie à l'intérieur du passage de paroi ou de plafond (8) et de ce fait entre la face extérieure (14) de l'élément d'installation longitudinal (3) et du premier intrados (12) de la première ouverture (10), et
d) au moins un élément de sécurité ininflammable (9) en forme de bande ou de fil avec une première extrémité (15) et une deuxième extrémité (16), au moins un élément de sécurité ininflammable (9) en forme de bande ou de fil
i. s'étendant entre la face extérieure (14) de l'élément d'installation longitudinal (3) et de la face intérieure (17) orientée vers la face extérieure (14) de l'élément d'installation longitudinal (3) de la première manche coupe-feu (4) à travers le passage de paroi ou de plafond (8), et
ii. étant replié à sa première extrémité (15) de telle sorte qu'il englobe la face avant (18) de la première manche coupe-feu (4), orientée vers le premier espace à risque d'incendie (6) et étant ramené sur la face extérieure (19) de la première manche coupe-feu (4) avec sa première extrémité (15) à tel point dans le passage de paroi ou de plafond (8) qu'il vient en prise dans l'interstice annulaire (20) entre la première manche coupe-feu (4) et le premier intrados (12).

2. Agencement selon la revendication 1 pour une paroi,
a) l'élément d'installation longitudinal (3) étant en plus passé à travers la deuxième ouverture (11) du passage de paroi (8), orientée vers un deuxième espace (7) à risque d'incendie,
b) l'élément d'installation longitudinal (3) étant enveloppé sur sa face extérieure (14) dans la zone de la deuxième ouverture (11) par une deuxième manche coupe-feu (5), qui est disposée au moins en partie à l'intérieur du passage de paroi (8) et de ce fait entre la face extérieure (14) de l'élément d'installation longitudinal (3) et le deuxième intrados (13) de la deuxième ouverture (11), et
c) au moins un élément de sécurité ininflammable (9) en forme de bande ou de fil s'étendant à travers le passage de paroi (8) entre la face extérieure (14) de l'élément d'installation longitudinal (3) et les faces intérieures (17) des manches coupe-feu (4, 5), orientées vers l'élément d'installation longitudinal (3) est replié à ses deux extrémités (15, 16) de manière qu'il englobe respectivement les faces avant (18) des manches coupe-feu (4, 5), orientées vers les espaces (6, 7) à risque d'incendie et est ramené sur les faces extérieures (19) des manches coupe-feu (4, 5) avec les deux extrémités (15, 16) à un tel point dans le passage de paroi (8) qu'il vient en prise dans l'interstice annulaire (20) entre la première manche coupe-feu (4) et le premier intrados (12) ainsi que dans l'interstice annulaire (20) entre la deuxième manche coupe-feu (5) et le deuxième intrados (13).

3. Agencement selon la revendication 1 pour un plafond, **caractérisé en ce que** l'élément de sécurité ininflammable (9) en forme de bande ou de fil est replié sur sa deuxième extrémité (16) en s'écartant de l'élément d'installation longitudinal (3) et est de préférence fixé sur une surface du plafond (2) tournée vers l'espace (25) opposé au premier espace à risque d'incendie (6).

4. Agencement selon l'une quelconque des revendications précédentes, **caractérisé en ce que** chaque extrémité (15, 16) ramenée dans le passage de paroi ou de plafond (8) de l'élément de sécurité ininflammable (9) en forme de bande ou de fil vient en prise au moins respectivement dans l'interstice annulaire (20) entre la manche coupe-feu (4, 5) et l'intrados (12, 13) à tel point que la manche coupe-feu (4, 5) englobée respectivement par l'élément de sécurité ininflammable (9) en forme de bande ou de fil reste englobé par l'élément de sécurité ininflammable (9) en forme de bande ou de fil même en cas d'incendie.

5. Agencement selon l'une quelconque des revendications précédentes, **caractérisé en ce qu'**au moins trois éléments de sécurité (9) en forme de bande ou de fil ignifugés sont disposés répartis sur la section transversale de l'élément d'installation longitudinal (3).

6. Procédé pour la fabrication d'une protection contre l'incendie pour un passage d'éléments d'installation longitudinaux comme des tuyaux, des conduites et des éléments analogues à travers une paroi ou un plafond (2), pour lequel s'agissant d'un élément d'installation longitudinal (3) qui est passé à travers une première ouverture (10) d'un passage de paroi ou de plafond (8), comportant un premier intrados (12), orientée vers un premier espace (6) à risque d'incendie, et qui est enveloppé sur sa face extérieure dans la zone de la première ouverture (10) par une première manche coupe-feu (4) de telle sorte que la première manche coupe-feu (4) est au moins en partie disposée à l'intérieur du passage de paroi ou de plafond (8) et de ce fait entre la face extérieure et le premier intrados (12) de la première ouverture (10), au moins un élément de sécurité ininflammable (9) en forme de bande ou de fil est passé avec une première extrémité (15) et une deuxième extrémité (16)
a) à travers le passage de paroi ou de plafond (8) entre la face extérieure de l'élément d'installation longitudinal (3) et la face intérieure (17) de la première manche coupe-feu (4), orientée vers la face extérieure de l'élément d'installation longitudinal (3) et sera ou est replié sur sa première extrémité (15) de telle sorte qu'il englobe la face avant (18) de la première manche coupe-feu (4), orientée vers le premier espace (6) à risque d'incendie, et
b) est ramené avec son extrémité repliée (15) sur la face extérieure de la première manche coupe-feu (4) à tel point dans le passage de paroi ou de plafond (8) qu'il vient en prise dans l'interstice annulaire (20) entre la première manche coupe-feu (4) et le premier intrados (12).

7. Procédé selon la revendication 6, **caractérisé en ce que**
a) pour la fabrication d'une protection contre l'incendie pour un passage d'éléments d'installation longitudinaux (3) à travers une paroi, l'élément d'installation longitudinal est passé en plus à travers une deuxième ouverture (11) du passage de paroi ou de plafond (8) opposée à la première ouverture (10), orientée vers un deuxième espace (7) à risque d'incendie, comportant un deuxième intrados (13) et l'élément d'installation longitudinal (3) est enveloppé sur sa face extérieure dans la zone de la deuxième ouverture (11) par une deuxième manche coupe-feu (5), qui est disposée au moins en partie à l'intérieur du passage de paroi (8) et de ce fait entre la face extérieure de l'élément d'installation longitudinal (3) et le deuxième intrados (13) de la deuxième ouverture (11), au moins un élément de sécurité ininflammable (9) en forme de bande ou de fil étant passé
i) à travers le passage de paroi (8) entre la face extérieure de l'élément d'installation longitudinal (3) et les faces intérieures (17) des manches coupe-feu (4, 5), orientées vers l'élément d'installation longitudinal (3) et replié sur ses deux extrémités (15, 16) de telle sorte qu'il englobe respectivement les faces avant (18) des manches coupe-feu (4, 5), orientées vers les espaces (6, 7) à risque d'incendie, ou
ii) est passé à travers le passage de paroi (8) entre la face extérieure de l'élément d'installation longitudinal (3) et les faces intérieures (17) des manches coupe-feu (4, 5), orientées vers l'élément d'installation longitudinal (3), celui-ci étant précambré à ses extrémités (15, 16) de telle manière qu'il englobe après traversée à travers le passage de paroi (8) la face avant (17) de la première manche coupe-feu (4), orientée vers les espaces à risque d'incendie (6, 7) et sera replié sur son autre extrémité (16, 15) de telle manière qu'il englobe la face avant (18) de la deuxième manche coupe-feu (5), orientée vers les espaces à risque d'incendie (6, 7), et
iii) est ramené avec ses extrémités repliées (15, 16) sur les faces extérieures des manches coupe-feu (4, 5) à tel point dans le passage de paroi (8) qu'il vient en prise respectivement dans l'interstice annulaire (20) entre la manche coupe-feu (4, 5) et l'intrados (12, 13), ou
b) pour la fabrication d'une protection contre l'incendie pour un passage d'éléments d'installation longitudinaux (3) à travers un plafond (2), au moins un élément de sécurité ininflammable (9) en forme de bande ou de fil est replié sur sa deuxième extrémité (16) en s'écartant de l'élément d'installation longitudinal (3) et est fixé de préférence sur une surface du plafond (2) tournée vers un espace (25) sans risque d'incendie.

8. Procédé selon l'une quelconque des revendications 6 ou 7, **caractérisé en ce que** chaque extrémité (15, 16) de l'élément de sécurité ininflammable (9) en forme de bande ou de fil, ramenée dans le passage de paroi ou de plafond (8) vient respectivement au moins en prise à tel point dans l'interstice annulaire (20) entre la manche coupe-feu (4, 5) et l'intrados (12, 13) que la manche coupe-feu (4, 5) respectivement englobée par l'élément de sécurité ininflammable (9) en forme de bande ou de fil reste englobé par l'élément de sécurité ininflammable (9) en forme de bande ou de fil même en cas d'incendie.

9. Procédé selon l'une quelconque des revendications 6 à 8, **caractérisé en ce qu'**au moins trois éléments de sécurité ininflammables (9) en forme de bande ou de fil sont disposés répartis sur la section transversale de l'élément d'installation longitudinal (3).
